(19) Europäisches Patentamt
European Patent Office
Office européen des brevets

(11) **EP 1 474 741 B1**

(12) **EUROPÄISCHE PATENTSCHRIFT**

(45) Veröffentlichungstag und Bekanntmachung des Hinweises auf die Patenterteilung:
**01.03.2006 Patentblatt 2006/09**

(51) Int Cl.:
***G06F 7/52*** *(2006.01)*

(21) Anmeldenummer: 03739440.0

(22) Anmeldetag: **23.01.2003**

(86) Internationale Anmeldenummer:
**PCT/EP2003/000669**

(87) Internationale Veröffentlichungsnummer:
**WO 2003/069462 (21.08.2003 Gazette 2003/34)**

(54) **VORRICHTUNG UND VERFAHREN ZUM BERECHNEN EINES ERGEBNISSES AUS EINER DIVISION**

SYSTEM AND METHOD FOR CALCULATING A RESULT FROM A DIVISION

SYSTEME ET PROCEDE POUR CALCULER LE RESULTAT D'UNE DIVISION

(84) Benannte Vertragsstaaten:
**DE FR GB**

(30) Priorität: **12.02.2002 DE 10205713**

(43) Veröffentlichungstag der Anmeldung:
**10.11.2004 Patentblatt 2004/46**

(73) Patentinhaber: **Infineon Technologies AG
81669 München (DE)**

(72) Erfinder: **FISCHER, Wieland
80469 München (DE)**

(74) Vertreter: **Zinkler, Franz
Patentanwälte Schoppe, Zimmermann,
Stöckeler & Zinkler,
Postfach 246
82043 Pullach bei München (DE)**

(56) Entgegenhaltungen:
**US-A- 5 710 730          US-A- 5 999 962**

- **CHING YU HUNG ET AL: "Fast RNS division algorithms for fixed divisors with application to RSA encryption" INFORMATION PROCESSING LETTERS, 24 AUG. 1994, NETHERLANDS, Bd. 51, Nr. 4, Seiten 163-169, XP002267751 ISSN: 0020-0190**
- **ELDRIDGE S E ET AL: "HARDWARE IMPLEMENTATION OF MONTGOMERY'S MODULAR MULTIPLICATION ALGORITHM" IEEE TRANSACTIONS ON COMPUTERS, IEEE INC. NEW YORK, US, Bd. 42, Nr. 6, 1. Juni 1993 (1993-06-01), Seiten 693-699, XP000578160 ISSN: 0018-9340**

**Beschreibung**

Die vorliegende Erfindung bezieht sich auf kryptographische Algorithmen und insbesondere auf Divisionsalgorithmen, die für kryptographische Anwendungen geeignet sind.

In kryptographischen Algorithmen wird oftmals die Division zweier langer Zahlen benötigt. Beispielsweise ist im RSA-Algorithmus der Modul N ein Produkt aus zwei Primzahlen p, q, wobei q erhalten wird, wenn N durch p geteilt wird, oder p erhalten wird, wenn N durch q geteilt wird.

Ist eine Divisionsroutine auf einem dafür verwendeten kryptographischen Coprozessor nicht als expliziter Befehl, der aus Mikrobefehlen besteht, die schnell intern abgearbeitet werden, eingebaut, so muß die Division mittels Software geschehen. Konventionelle Divisionsroutinen hierfür sind einerseits langsam und andererseits nicht sicher gegen SPA-Angriffe (SPA = Simple Power Analysis = einfache Leistungsanalyse).

Übliche Divisionsroutinen, wie sie beispielsweise in "Computer Arithmetic, Henessy und Patterson, Morgan Kaufmann Publishers, Inc., 1996, beschrieben sind, wie z. B. die Restoring-Division, die Non-Restoring-Division, etc. basieren darauf, daß Registerverschiebungen vorgenommen werden, und daß dann Subtraktionen bzw. Additionen durchgeführt werden, abhängig davon, ob bestimmte Bits bestimmte Werte haben. Solche Routinen sind für SPA-Angriffe anfällig, da der Strom- bzw. Leistungsverbrauch und darüber hinaus der Zeitverbrauch von den zu verarbeitenden Zahlen abhängt. Ein Angreifer könnte daher anhand des Strom- bzw. Zeit-Profils Rückschlüsse auf die verarbeiteten Zahlen erhalten und somit z. B. einen geheimen Schlüssel eines Public-Key-Kryptoalgorithmus ausspähen.

Um diesem Problem zu begegnen, werden sogenannte Dummy-Operationen eingebaut, durch die eine Homogenisierung des Stromprofils erreicht werden kann. Der Einbau von Dummy-Operationen hat jedoch einen zusätzlichen Performance-Verlust zur Folge, der bis zu 33% betragen kann.

Das US-Patent Nr. 5,710,730 offenbart ein System und ein Verfahren zum Bereitstellen eines unterbrechbaren Befehls zum Berechnen eines Rests einer Ganzzahldivision. Dieser Befehl kann einen Quotienten und einen Restwert berechnen. Restwerte werden durch eine iterative Prozedur berechnet. In jedem Schritt wird der Betrag des Dividenden reduziert, bis der endgültige Rest erhalten werden kann. In Zwischenschritten wird ein Vorzeichen eines neuen (kleineren) Dividenden gleich dem Vorzeichen des ursprünglichen Dividenden gehalten, und ein Wert, der als ein Teil des Quotienten angesehen werden kann, wird gegen Null gerundet. Nur im letzten Schritt werden die Vorzeichen der Operanden berücksichtigt. Während dieser Berechnung werden die Partial-Quotienten gespeichert, so dass am Ende nicht nur ein Rest, sondern auch der Quotient selbst erhalten worden sind.

Die Aufgabe der vorliegenden Erfindung besteht darin, ein effizienteres und sichereres Konzept zum Berechnen einer Division zu schaffen.

Diese Aufgabe wird durch eine Vorrichtung zum Berechnen eines Ergebnisses einer Division nach Patentanspruch 1 oder durch ein Verfahren zum Berechnen eines Ergebnisses einer Division nach Patentanspruch 14 gelöst.

Der vorliegenden Erfindung liegt die Erkenntnis zugrunde, daß insbesondere für kryptographische Zwecke von den klassischen Divisionsroutinen weggegangen werden muß, um eine Division auszuführen. Erfindungsgemäß wird eine Division auf eine modulare Reduktion zurückgeführt, indem ein Faktor eingeführt wird, der so gewählt ist, daß ein Produkt aus dem Faktor und dem Nenner für die Division größer als das Ergebnis der Division ist. Die modulare Reduktion wird auf ein erstes Produkt aus dem Zähler und dem Faktor ausgeführt, wobei ein Modul verwendet wird, der gleich einer Summe aus einem zweiten Produkt des Nenners und des Faktors und einer ganzen Zahl ist, um eine Hilfsgröße zu erhalten, die das Ergebnis der Division aufweist. Schließlich kann das Ergebnis ohne großen Rechenaufwand aus der Hilfsgröße extrahiert werden.

Das erfindungsgemäße Konzept ist dahingehend vorteilhaft, daß das Strom- und/oder Zeitprofil unabhängig von den zu verarbeitenden Größen, also von dem Zähler und dem Nenner, sind. Darüber hinaus kann die modulare Reduktion, auf die die zu berechnende Division letztendlich zurückgeführt wird, recheneffizient ausgeführt werden. Insbesondere bei Kryptoprozessoren ist die modulare Reduktion eine vielfach verwendete Operation, für die typischerweise effiziente Algorithmen hardwaremäßig in einem Kryptocoprozessor implementiert sind. Die modulare Reduktion kann daher schnell und effizient ausgerechnet werden.

Je nach Hardwareimplementation kann die Extraktion des Ergebnisses der Division aus der Hilfsgröße entweder unmittelbar aus einem Langzahlregister abgelesen werden, wenn ein Register ausreichender Länge vorhanden ist.

Alternativ kann zur Extraktion des Ergebnisses eine weitere modulare Reduktion und eine Subtraktion durchgeführt werden, wobei in diesem Fall der Rechenaufwand ebenfalls im Rahmen bleibt, da auch die weitere modulare Reduktion schnell und sicher unter Verwendung von auf Kryptocoprozessoren ohnehin vorhandenen effizienten Reduktionsschaltungen durchgeführt wird.

Das erfindungsgemäße Konzept liefert bei gleichzeitiger Erhöhung der Sicherheit eine wesentliche Beschleunigung der Division. Eine Division langer Zahlen benötigt bei dem bekannten Prozessor ACE (ACE = Advanced Crypto Engine), der von der Infineon Technologies AG aus München, Bundesrepublik Deutschland, verfügbar ist, etwa 27 Takte pro Bit. Die erfindungsgemäße Division benötigt auf demselben Prozessor lediglich sechs Takte pro Bit, was einer Beschleunigung um das 4,5-fache entspricht.

Das erfindungsgemäße Divisionskonzept ist gleichzeitig gegenüber SPA-Attacken sicher, da der Strom- bzw. Zeitverbrauch unabhängig von dem speziellen Bitmuster der verarbeiteten Zahlen, also des Zählers und des Nenners, ist.

Bevorzugte Ausführungsbeispiele der vorliegenden Erfindung werden nachfolgend Bezug nehmend auf die beiliegenden Zeichnungen detailliert erläutert. Es zeigen:

Fig. 1    ein Blockschaltbild einer erfindungsgemäßen Vorrichtung zum Berechnen einer Division;

Fig. 2    ein Blockschaltbild eines erfindungsgemäßen Verfahrens gemäß einem bevorzugten Ausführungsbeispiel; und

Fig. 3    eine Darstellung der Hilfsgröße in einem binären Langzahlregister zur Erläuterung einer Extraktion des Ergebnisses aus der Hilfsgröße.

Bevor detailliert auf die Figuren eingegangen wird, wird zunächst eine Herleitung des erfindungsgemäßen Divisionskonzepts gegeben, das auf einer modularen Reduktion eines ersten Produkts aus dem Zähler und dem Faktor basiert, wobei der Modul gleich einer Summe aus einem zweiten Produkt aus dem Nenner und dem Faktor und einer ganzen Zahl ist.

Gesucht wird das Ergebnis Q aus einer Division eines Zählers A durch einen Nenner N gemäß folgender Gleichung:

$$Q = A/N \qquad\qquad (1)$$

Ohne Einschränkung der Allgemeinheit sei angenommen, daß sowohl der Zähler A als auch der Nenner N binäre Zahlen sind, so daß gilt:

$$2^{a-1} \leq A < 2^a \qquad\qquad (2a)$$

$$2^{n-1} \leq N < 2^n \qquad\qquad (2b)$$

Die Gleichungen 2a und 2b geben die Größenordnungen des Zählers A und des Nenners N an.

Gleichung 1 kann folgendermaßen umgeformt werden:

$$A = Q \cdot N + H \qquad\qquad (3a)$$

Der Wert H aus Gleichung 3 berechnet sich folgendermaßen:

$$H = A - Q \cdot N \qquad\qquad (3b)$$

wobei der Wert H größer oder gleich 0 und kleiner als N ist.

Aus Gleichung 3a wird ersichtlich, daß das Ergebnis Q der Division, das im nachfolgenden von Interesse ist, das ganzzahlige Ergebnis ist, während die Größe H der Rest ist. Das Ergebnis Q der Division aus A und N stellt somit das Ergebnis der sogenannten DIV-Operation dar, während der Rest H durch die modulare Reduktion des Zählers A mit dem Nenner N als Modul erhalten wird:

$$H = A \bmod N. \qquad\qquad (4)$$

Es sei darauf hingewiesen, daß jede Gleitkommadivision auf eine ganzzahlige Division zurückgeführt werden kann, nämlich z. B. durch Kommaverschiebung und durch eine Rundung auf die nächste ganze Zahl. Üblicherweise werden Gleitkommadivisionen innerhalb eines Rechenwerks auf ganzzahlige Divisionen zurückgeführt.

Erfindungsgemäß wird nunmehr ein Faktor F eingeführt, der im Falle eines binären Zahlensystems folgendermaßen definiert ist:

$$F = 2^e \qquad (5)$$

Die Basis ist, da hier lediglich beispielhaft ein binäres Zahlensystem betrachtet wird, die Zahl 2, während der Faktor F sich ergibt, wenn die Basis 2 mit einem Exponenten e potenziert wird. Erfindungsgemäß muß der Faktor F folgende Bedingung erfüllen:

$$N \cdot F > Q \qquad (6)$$

beziehungsweise, wenn Gleichung 5 in Gleichung 6 eingesetzt wird:

$$N \cdot 2^e > Q \qquad (7)$$

Der Faktor wird also so bestimmt, daß das Produkt aus dem Faktor F und dem Nenner der Division (Gleichung 1) größer als das gesuchte Ergebnis Q der Division ist.

Es sei darauf hingewiesen, daß für diese Betrachtung das genaue Ergebnis Q der Division nicht bekannt sein muß, gerade dieses soll ja berechnet werden. Lediglich die Größenordnung von Q muß bekannt sein, um den Faktor F richtig zu dimensionieren.

So ist es jedoch typischerweise kein Problem, die Größenordnung des Ergebnisses der Division aus dem Zähler und dem Nenner abzuschätzen, zumal Gleichung 6 lediglich eine Größerals-Bedingung umfaßt, so daß immer ein korrekter Ablauf des Algorithmus sichergestellt ist, wenn der Faktor F sehr groß gewählt wird.

Es wird jedoch bevorzugt, den Faktor eher kleiner zu wählen, da der Faktor die Länge der für die Berechnung der Division benötigten Register bestimmt. Wird der Faktor sehr groß gewählt, werden sehr lange Register benötigt, während kürzere Register ausreichen, wenn der Faktor F kleiner gewählt wird. Die nachfolgende Gleichung 8 gibt für den binären Fall (Gleichung 5) eine bevorzugte Dimensionierung der Größe e an:

$$e \geq a + 2 - 2n \qquad (8)$$

Gleichung 8 enthält lediglich Informationen über den Zähler A (Gleichung 2a) und Informationen über den Nenner N (Gleichung 2b). Wenn e so wie in Gleichung 8 dimensioniert wird, so ist die Bedingung für den Faktor aus Gleichung 6 immer erfüllt.

Wenn Gleichung 3 mit dem Faktor F multipliziert wird, so ergibt sich folgende Gleichung:

$$A \cdot F = Q \cdot N \cdot F + H \cdot F \qquad (9)$$

Wenn darüber hinaus Gleichung 4 ebenfalls mit dem Faktor F auf beiden Seiten multipliziert wird, so ergibt sich folgende Gleichung 10:

$$H \cdot F = A \cdot F \bmod (N \cdot F) \qquad (10)$$

Es gilt ferner:

$$0 \leq H \cdot F < N \cdot F \qquad (11)$$

Gleichung 11 zeigt an, daß das Ergebnis der modularen Reduktion von Gleichung 10 in der Restklasse des Moduls N · F liegen muß, also größer oder gleich 0 und kleiner als N · F ist.

Auf der rechten Seite von Gleichung 9 wird nunmehr das Resultat Q hinzuaddiert und gleichzeitig abgezogen, was folgender Gleichung entspricht:

$$A \cdot F = Q \cdot N \cdot F + Q + H \cdot F - Q \qquad (12)$$

Wenn Gleichung 12 so umgeformt wird, daß das Resultat Q von den ersten beiden Termen auf der rechten Seite von Gleichung 12 ausgeklammert wird, so ergibt sich folgender Ausdruck:

$$A \cdot F = Q (N \cdot F + 1) + H \cdot F - Q \qquad (13)$$

Alternativ kann Gleichung 12 auch so umgeformt werden, daß die Summe von HF und Q und nicht die Differenz beider Terme gebildet wird:

$$A \cdot F = Q (N \cdot F - 1) + H \cdot F + Q \qquad (13')$$

Eine Umformung von Gleichung 13 bzw. 13' dahingehend, daß die Differenz H · F - Q (bzw. deren Summe) auf der linken Seite der Gleichung steht, führt zu folgendem Ausdruck:

$$H \cdot F - Q = A \cdot F - Q (N \cdot F + 1) \qquad (14)$$

Für die "Summenalternative" ergibt sich folgendes:

$$H \cdot F + Q = A \cdot F - Q (N \cdot F - 1) \qquad (14')$$

Wenn Gleichung 14 oder 14' nunmehr mit Gleichung 3a und 3b verglichen wird, so zeigt sich, daß Gleichung 14 eine neue Bestimmungsgleichung für eine neue Division ist, wobei die Differenz bzw. Summe auf der linken Seite von Gleichung 14 bzw. 14', also die Hilfsgröße (H · F - Q) bzw. (H · F + Q), in der das gesuchte Resultat Q enthalten ist, dem Rest einer ganzzahligen Division eines Zählers A · F durch einen Nenner (N · F + 1) bzw. (N · F - 1) entspricht.

Der Rest dieser Division, also die Hilfsgröße auf der linken Seite von Gleichung 14 kann durch folgende Gleichung 15 in Analogie zu Gleichung 4 berechnet werden:

$$H \cdot F - Q = A \cdot F \bmod (N \cdot F + 1) \qquad (15)$$

Gleichung 15 stellt somit die modulare Reduktion dar, die als Ergebnis die Hilfsgröße H · F - Q ergibt, aus der, wie es nachfolgend dargestellt ist, auf verschiedene Arten und Weisen ohne erheblichen Aufwand das gesuchte Resultat Q extrahiert werden kann. Gleichung 15 stellt somit die zentrale modulare Reduktion dar, auf die die Division (Gleichung 1) zurückgeführt worden ist. Es sei darauf hingewiesen, daß die Differenz auf der linken Seite der vorstehenden Gleichung auch negativ sein könnte. In diesem Fall wird der Modul hinzuaddiert, damit die Gleichung erfüllt ist, zumal das Ergebnis einer modularen Reduktion per Definition nicht negativ sein kann.

Für die "Summenalternative" ergibt sich folgende Gleichung:

$$H \cdot F + Q = A \cdot F \bmod (N \cdot F - 1) \qquad (15')$$

Wie es nachfolgend dargelegt wird, existieren verschiedene Möglichkeiten, um das gesuchte Resultat Q aus der Hilfsgröße H · F +/- Q zu extrahieren.

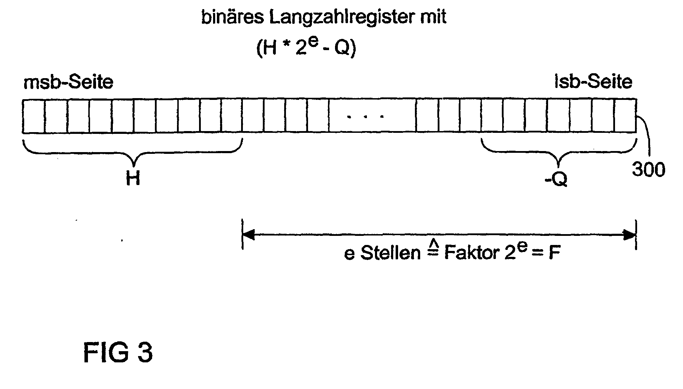

Hierzu wird zunächst auf Fig. 3 Bezug genommen, um eine Art und Weise zum Extrahieren des Ergebnisses Q der Division des Zählers A durch den Nenner N zu zeigen. Fig. 3 zeigt ein binäres Langzahlregister 300, in das das Ergebnis der modularen Reduktion auf der rechten Seite von Gleichung 15 eingespeichert worden ist. Das Langzahlregister hat eine msb-Seite und eine lsb-Seite (msb = most significant bit = höchstwertiges Bit; lsb = least significant bit = niederstwertiges Bit).

In dem Register 300 befinden sich nunmehr die Zahlen H · F und Q wie folgt. Die Zahl H · F ist eine große Zahl und entspricht hinsichtlich ihres Bitmusters der Zahl H, wie es in Fig. 3 dargestellt ist, da die Zahl H · F aus der Zahl H erhalten wird, wenn die Zahl H um i Stellen in dem Langzahlregister nach links verschoben wird, wobei der Faktor F als $2^e$ gewählt ist.

Darüber hinaus ist in dem binären Langzahlregister 300 von Fig. 3 eine im Vergleich zur Zahl H · F kleine Zahl "-/+Q" enthalten, d. h. das Negative bzw. das Positive des gesuchten Ergebnisses Q. Ist das Langzahlregister 300 so groß und ist der Faktor F so groß gewählt worden, daß sich die Zahlen H und -Q bzw. +Q im Register 300 nicht überlappen, wobei ein solcher Fall in Fig. 3 dargestellt ist, so kann die gesuchte Zahl -Q aus dem Register 300 direkt ausgelesen werden. Die Zahl Q ergibt sich nach einer Invertierung von -Q. Hierzu sind die entsprechenden Bits auf der lsb-Seite des Registers zu betrachten (das ergibt -Q). Dann wird - bei der üblichen Verwendung des Zweierkomplements - das darin enthaltene Bitmuster invertiert, wonach noch zu den invertierten Bits eine Eins hinzuaddiert wird, um das gesuchte Resultat Q zu erhalten.

Es ist somit lediglich eine einfache arithmetische Operation in Form des Hinzuaddierens einer Eins zu den invertierten Bits erforderlich. Keine größeren arithmetischen Operationen, wie z. B. eine Subtraktion unter Verwendung des Registerinhalts etc., ist vonnöten. Aufgrund der Größenunterschiede der Zahlen H · F und Q ist es ohne weiteres möglich Q gewissermaßen aus dem Register 300 separat abzulesen, also aus der Hilfsgröße (der linken Seite von Gleichung 15) zu extrahieren.

Es sei darauf hingewiesen, daß der Faktor F nicht unbedingt so groß gewählt werden muß, daß die Zahlen H und -Q in dem in Fig. 3 gezeigten Register keinen Überlappungsbereich haben. Selbst wenn diese Zahlen einen Überlappungsbereich haben, ist es ebenfalls, wie es nachfolgend dargelegt wird, möglich, die Zahl Q aus der Hilfsgröße zu extrahieren. Hierzu wird eine weitere modulare Reduktion ausgeführt, wie sie in Gleichung 16 dargestellt ist:

$$H \cdot F = A \cdot F \bmod (N \cdot F) \qquad (16)$$

Gleichung 16 entspricht Gleichung 4, wobei jedoch nunmehr der Faktor F berücksichtigt ist.

Das gesuchte Resultat Q ergibt sich in diesem Fall dadurch, daß von dem Ergebnis von Gleichung 16 die Gleichung 15 subtrahiert wird:

$$H \cdot F - (H \cdot F - Q) = Q \qquad (17)$$

Es sei auf folgende Fallunterscheidung hingewiesen, wenn die Hilfsgröße, also die Differenz H · F - Q negativ ist. Wenn die Differenz H · F - Q in Gleichung 15 negativ ist, so wird auf der linken Seite von Gleichung 15 der Modul (N · F + 1) hinzuaddiert, da definitionsgemäß das Ergebnis einer modularen Reduktion stets positiv sein soll. Wenn also die Hilfsgröße negativ ist, so daß in Gleichung 15 auf der linken Seite ein Modul hinzuaddiert wird, so wird dies auch bei der Subtraktion der Gleichung 15 von der Gleichung 16 folgendermaßen berücksichtigt:

$$Q = A \cdot F \bmod (N \cdot F) - A \cdot F \bmod (N \cdot F + 1) + N \cdot F + 1 \qquad (18)$$

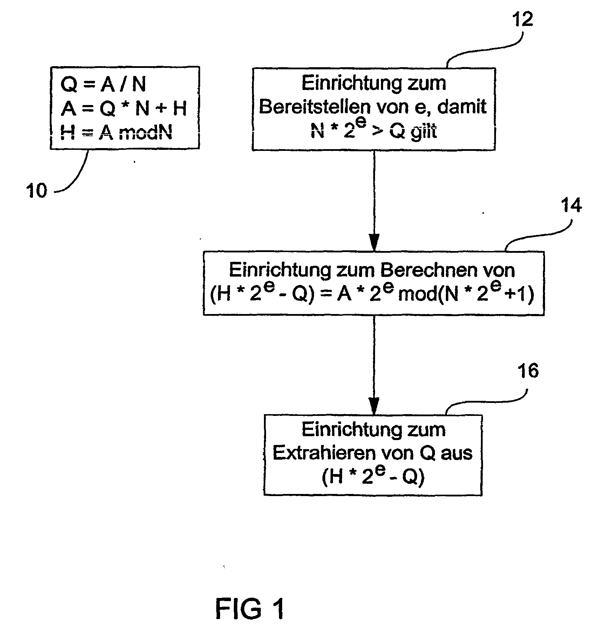

Im nachfolgenden wird auf Fig. 1 eingegangen, um ein Blockschaltbild einer bevorzugten Vorrichtung zum Berechnen eines Ergebnisses, oder, wie es später noch ausgeführt wird, eines ganzzahligen Vielfachen des Ergebnisses Q einer Division eines Zählers durch einen Nenner zu berechnen. Die Bestimmungsgleichungen sind der Übersichtlichkeit halber in einem Block 10 in Fig. 1 dargestellt. Die erfindungsgemäße Vorrichtung umfaßt eine Einrichtung 12 zum Bereitstellen eines Faktors und insbesondere einer Zahl e, die als Exponent der Basis 2 den Faktor bildet, damit Gleichung 6 bzw. Gleichung 7 erfüllt ist.

Die erfindungsgemäße Vorrichtung umfaßt ferner eine Einrichtung 14 zum Berechnen der Hilfsgröße, also zum Ausführen der Gleichung 15. Schließlich umfaßt die erfindungsgemäße Vorrichtung eine Einrichtung 16 zum Extrahieren von Q aus der Hilfsgröße auf eine von verschiedenen Arten und Weisen, beispielsweise durch den in Fig. 3 beschriebenen Mechanismus oder durch Berechnen einer weiteren modularen Reduktion (Gleichung 16) und durch Subtrahieren der Ergebnisse der beiden modularen Reduktionen, wie es durch Gleichung 17 veranschaulicht ist.

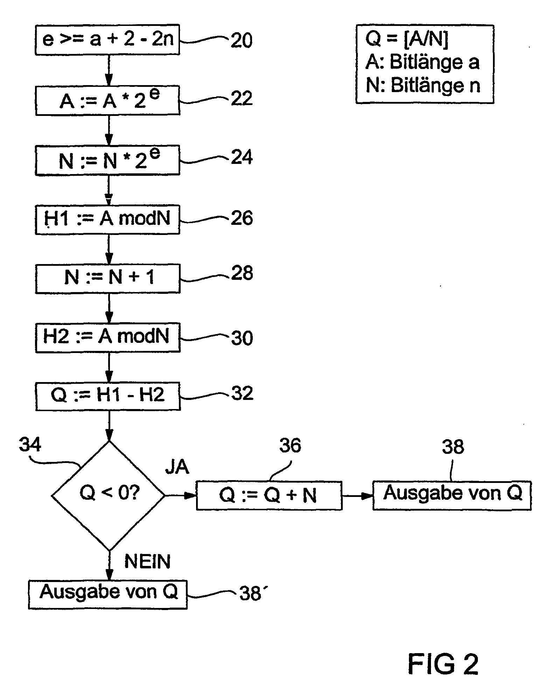

Im nachfolgenden wird auf Fig. 2 Bezug genommen, um ein bevorzugtes Verfahren darzustellen, das lediglich mit vier Registern auskommt, nämlich mit einem ersten Register für den Zähler A, mit einem zweiten Register für den Nenner N, mit einem dritten Register für die erste Hilfsgröße H1 und mit einem vierten Register H2 für die zweite Hilfsgröße. Optional kann ein fünftes Ergebnisregister verwendet werden, oder das Zählerregister, das Nennerregister oder das dritte Register für die erste Hilfsgröße können als Ergebnisregister eingesetzt werden, wenn es gewünscht ist.

In einem Schritt 20 wird zunächst der Wert e gemäß Gleichung 8 gewählt. Hierauf wird das Zählerregister mit dem ersten Produkt A · F geladen (Schritt 22). Anschließend wird das Nennerregister ebenfalls neu geladen, und zwar mit dem zweiten Produkt (24). In einem Schritt 26 wird dann eine modulare Reduktion gemäß Gleichung 16 berechnet. Dann, nach dem Berechnen im Schritt 26 wird der Nenner um 1 inkrementiert (Schritt 28), um in einem Schritt 30 die zentrale Reduktionsgleichung 15 zu berechnen. In einem Schritt 32 wird dann eine Subtraktion der beiden relevanten Gleichungen 15 und 16 durchgeführt, wie es durch Gleichung 17 dargestellt ist. Nach dem Berechnen der Differenz im Schritt 32 wird in einem Schritt 34 überprüft, ob das Resultat negativ ist. Ist dies der Fall, so wird der Modul hinzuaddiert (Schritt 36), um das Ergebnis Q der Division zu erhalten (Schritt 38).

Wird dagegen im Schritt 34 festgestellt, daß das durch den Schritt 32 erhaltene Resultat größer als 0 ist, so wird dieses Resultat unmittelbar als Resultat der Division ausgegeben (Schritt 38').

Es sei darauf hingewiesen, daß das in Fig. 2 gezeigte Ausführungsbeispiel der vorliegenden Erfindung insbesondere dann vorteilhaft eingesetzt werden kann, wenn die Zahlen H und Q in dem binären Langzahlregister 300 von Fig. 3 überlappend sind, da dann die anhand von Fig. 3 beschriebene Vorgehensweise des Auslesens der untersten Bits des Registers 300 und des anschließenden Invertierens, um das Resultat Q zu erhalten, nicht zu korrekten Ergebnissen führt. Bei dem in Fig. 2 gezeigten Ausführungsbeispiel der vorliegenden Erfindung umfaßt die Einrichtung 16 zum Extrahieren des Resultats Q aus der Differenz $H \cdot 2^e - Q$ die Funktionalität der Schritte 26, 32, 34 und 36.

Wie es nachfolgend dargelegt wird, kann das erfindungsgemäße Konzept ohne erhöhten Aufwand auch dazu verwendet werden, um nicht nur das Ergebnis einer Division zu berechnen, sondern das ganzzahlige Vielfache der Division. Dies kann ohne weiteres dadurch erreicht werden, daß in dem Modul auf der rechten Seite von Gleichung 15 statt der Zahl "1" eine Ganzzahl x > 1 eingesetzt wird, wobei gleichzeitig auf der linken Seite von Gleichung 15 das Resultat Q ebenfalls mit der Ganzzahl x multipliziert wird, so daß sich die folgende Gleichung 19 ergibt:

$$H \cdot F - Q \cdot x = A \cdot F \bmod (N \cdot F + x) \qquad (19)$$

Wird eine Zahl x größer als 1 verwendet, so muß dies auch in Gleichung 6, bei der Wahl des Faktors F berücksichtigt werden, und zwar dahingehend, daß der Faktor im Vergleich zu x = 1 das x-fache betragen muß.

Bei der Betrachtung von Gleichung 19 zeigt sich, daß das Resultat Q · x, das beispielsweise durch Registerauslesen erhalten werden kann, entweder unmittelbar verwendet werden kann, wenn ein nachfolgender Algorithmusschritt nicht das Resultat Q, sondern ein x-faches des Resultats Q benötigt.

Alternativ kann, wenn doch das Resultat Q benötigt wird, wenn jedoch die modulare Reduktion mit dem Modul (N · F + x) aus irgendeinem Grund günstiger ausgerechnet werden kann als für den Fall x = 1, dieses erreicht werden, daß Q wieder durch x dividiert wird. Insbesondere in dem Fall, bei dem x ein ganzzahliges Vielfaches von 2 ist und ein binäres System vorliegt, kann dies durch Registerverschieben nach rechts um eine entsprechende Anzahl von Stellen erreicht werden.

Wenn Gleichung 19 in Analogie zu Gleichung 16 und 17 ausgewertet wird, so wird ebenfalls das x-fache von Q erhalten.

Eine weitere Alternative zum Extrahieren von Q bzw. einem Vielfachen von Q aus Gleichung 19 besteht darin, zur Auswertung die folgende Gleichung 20 zu verwenden, wobei Gleichung 20 generell Gleichung 19 entspricht, wobei nun jedoch die ganze Zahl y unterschiedlich zu x zu wählen ist. Wenn nunmehr Gleichung 20 von Gleichung 19 subtrahiert wird, ergibt sich folgende Gleichung 21. Auf der linken Seite von Gleichung 21 ergibt sich nun nicht das Resultat Q, sondern ein ganzzahliges Vielfaches des Resultats Q, nämlich die Differenz aus y und x. Q kann aus Gleichung 21 wieder erhalten werden, indem eine Division durch (y - x) durchgeführt wird. Auf diese Division kann verzichtet werden, wenn y und x so gewählt sind, daß deren Differenz gleich 1 ist.

$$H \cdot F - Q \cdot y = A \cdot F \bmod (N \cdot F + y) \qquad (20)$$

$$Q \cdot (y-x) = A \cdot F \bmod (N \cdot F + x) - A \cdot F \bmod (N \cdot F + y) \qquad (21)$$

Es sei darauf hingewiesen, daß die Parameter x und y auch negativ sein können, und zwar in Analogie zu der Vorgehensweise, die in Verbindung mit den Gleichungen (13') bis (15') dargelegt worden ist.

Die vorliegende Erfindung ist somit aufgrund ihrer Flexibilität, Sicherheit und Leistungsfähigkeit insbesondere für kryptographische Algorithmen und für kryptographische Coprozessoren geeignet, auf denen typischerweise eine sichere und effiziente Implementation der modularen Reduktion schaltungsmäßig implementiert ist.

Bezugszeichenliste

| | |
|---|---|
| 10 | Bestimmungsblock |
| 12 | Einrichtung zum Bereitstellen |
| 14 | Einrichtung zum modularen Reduzieren |
| 16 | Einrichtung zum Extrahieren |
| 20 | Bestimmen der Hilfszahl |
| 22 | Berechnen des ersten Produkts |
| 24 | Berechnen des zweiten Produkts |
| 26 | Berechnen einer ersten Hilfsgröße |
| 28 | Inkrementieren des Moduls |
| 30 | Berechnen der Hilfsgröße |
| 32 | Subtrahieren der Hilfsgröße von der weiteren Hilfsgröße |
| 34 | Überprüfen des Vorzeichens des Resultats |
| 36 | Hinzuaddieren eines Moduls |
| 38 | Ausgeben des Resultats |
| 38' | Ausgeben des Resultats |
| 300 | Langzahlregister |

**Patentansprüche**

1. Vorrichtung zum Berechnen eines Ergebnisses (Q) oder eines ganzzahligen Vielfachen des Ergebnisses (Q) einer Ganzzahldivision eines Zählers (A) durch einen Nenner (N) innerhalb eines kryptographischen Algorithmus, wobei der Zähler und der Nenner Parameter in dem kryptographischen Algorithmus sind, mit folgenden Merkmalen:

   einer Einrichtung (12), die zum Bereitstellen eines Faktors angepasst ist, der so gewählt ist, dass ein Produkt aus dem Faktor und dem Nenner (N) größer als das Ergebnis (Q) ist;

   einer Einrichtung (14), die zum modularen Reduzieren eines ersten Produkts (A · F) aus dem Zähler (A) und dem Faktor (F) unter Verwendung eines Moduls (N · F + x) angepasst ist, der gleich einer Summe aus einem zweiten Produkt (N · F) des Nenners (N) und des Faktors (F) und einer ganzen Zahl (x) ist, um eine Hilfsgröße (H · F - Q · x) zu erhalten, die das Ergebnis aufweist, wobei die Einrichtung (14), die zum modularen Reduzieren angepasst ist, ausgebildet ist, um die Hilfsgröße gemäß folgender Gleichung zu berechnen:

$$H \cdot F - Q \cdot x = A \cdot F \bmod (N \cdot F + x),$$

   wobei Q das Ergebnis oder das ganzzahlige Vielfache des Ergebnisses der Ganzzahldivision ist, wobei F der Faktor ist, wobei A der Zähler ist, wobei N der Nenner ist, wobei H = A mod N gilt, wobei x die ganze Zahl ist und größer oder gleich Eins ist, wobei mod eine modulare Reduktion darstellt, und wobei H · F - Q · x die Hilfsgröße darstellt; und

einer Einrichtung (16), die zum Extrahieren des Ergebnisses (Q) oder des ganzzahligen Vielfachen des Ergebnisses aus der Hilfsgröße angepasst ist,
wobei die Einrichtung (12), die zum Bereitstellen des Faktors (F) angepasst ist, ausgebildet ist, um im Falle einer ganzen Zahl (x) ungleich Eins den Faktor so zu wählen, dass ein Produkt aus dem Faktor (F) und dem Nenner (N) größer als das Ergebnis der Division multipliziert mit der ganzen Zahl ist.

2. Vorrichtung nach Anspruch 1, bei der die Einrichtung (12) zum Bereitstellen ausgebildet ist, um den Faktor derart zu bestimmen, dass eine Basis potenziert mit einer Hilfszahl gleich dem Faktor ist.

3. Vorrichtung nach Anspruch 2, bei der die Basis 2 ist, so dass die Multiplikation mit dem Faktor einer Verschiebung um eine Anzahl von Stellen in einem Register entspricht, wobei die Anzahl von Stellen gleich der Hilfszahl ist.

4. Vorrichtung nach einem der vorhergehenden Ansprüche,
bei der eine Zweierkomplementdarstellung für eine Darstellung von negativen Zahlen verwendet wird, und
bei der die Hilfsgröße in einem Register (300) gespeichert ist, und bei der die Einrichtung (16) zum Extrahieren eine Einrichtung zum Auslesen eines unteren Abschnitts (-Q) des Registers (300), in dem das Ergebnis enthalten ist, und eine Einrichtung zum Invertieren eines ausgelesenen Werts und zum Hinzuaddieren einer Eins aufweist.

5. Vorrichtung nach einem der Patentansprüche 1 bis 3,
bei der die Einrichtung (16) zum Extrahieren folgende Merkmale aufweist:

eine Einrichtung zum Berechnen (26), als weiterer Hilfsgröße,
eines Ergebnisses einer modularen Reduktion des Zählers multipliziert mit dem Faktor, wobei der Nenner multipliziert mit dem Faktor als Modul vorgesehen ist; und
einer Einrichtung (32) zum Subtrahieren der Hilfsgröße von der weiteren Hilfsgröße.

6. Vorrichtung nach einem der vorhergehenden Ansprüche, bei der die Division eine Ganzzahl-Division ist.

7. Vorrichtung nach Anspruch 3, bei der die Hilfszahl gemäß folgender Gleichung ausgewählt ist,

$$e \geq a + 2 - 2 n,$$

wobei e die Hilfszahl ist, wobei a die Anzahl der Stellen des Zählers (A) ist, und wobei n die Anzahl der Stellen des Nenners ist.

8. Vorrichtung nach Anspruch 5, bei der die Einrichtung (16) zum Extrahieren angeordnet ist, um festzustellen (34), ob das Ergebnis negativ ist, und um in diesem Fall zu dem Ergebnis den Modul hinzu zu addieren, der in der Einrichtung (14) zum modularen Reduzieren zur Verwendung vorgesehen ist.

9. Vorrichtung nach Patentanspruch 5, die ferner folgende Merkmale aufweist:

ein erstes Register zum Speichern des Zählers (A);
ein zweites Register zum Speichern des Nenners (N);
ein drittes Register zum Speicher der weiteren Hilfsgröße (H2);
ein viertes Register zum Speichern der Hilfsgröße (H1); und
eine Registersteuerungseinheit zum Steuern der Einrichtung (14) zum Berechnen und der Einrichtung (16) zum Extrahieren, um das Resultat (Q) zu erhalten.

10. Vorrichtung nach Patentanspruch 1,
bei der die Einrichtung (14) zum modularen Reduzieren ausgebildet ist, um einen Modul zu verwenden, der gleich einer Summe aus einem Produkt des Nenners und des Faktors und einer ganzen Zahl ist, wobei die ganze Zahl größer oder gleich 1 ist, und
bei der die Einrichtung (16) zum Extrahieren angeordnet ist, um eine modulare Reduktion unter Verwendung eines Moduls, der gleich einer Summe aus einem Produkt des Nenners und des Faktors und einer weiteren ganzen Zahl ist, wobei die weitere ganze Zahl ungleich der ganzen Zahl ist, so dass durch die Einrichtung (16) zum Extrahieren das Ergebnis der Division erhalten wird, wenn eine Differenz aus der weiteren ganzen Zahl und der ganzen Zahl gleich 1 ist, oder das Ergebnis multipliziert mit einem ganzzahligen Multiplikator erhalten wird, wobei der ganzzahlige Multiplikator gleich der Differenz aus der weiteren ganzen Zahl und der ganzen Zahl ist.

11. Vorrichtung nach einem der vorhergehenden Patentansprüche, die als Kryptocoprozessor einer kryptographischen Vorrichtung ausgebildet ist.

12. Vorrichtung nach einem der Patentansprüche 1 bis 3, bei der die ganze Zahl negativ ist, so dass das Ergebnis ohne Invertierung erhaltbar ist.

13. Vorrichtung nach Patentanspruch 10, 11 oder 12, bei der die weitere Zahl eine negative ganze Zahl ist.

14. Verfahren zum Berechnen eines Ergebnisses (Q) oder eines ganzzahligen Vielfachen des Ergebnisses (Q) einer Ganzzahldivision eines Zählers (A) durch einen Nenner (N) innerhalb eines kryptographischen Algorithmus, wobei der Zähler und der Nenner Parameter in dem kryptographischen Algorithmus sind, mit folgenden Schritten:

Bereitstellen (12) eines Faktors (F), der so gewählt ist, dass ein Produkt (N · F) aus dem Faktor (F) und dem Nenner (N) größer als das Ergebnis (Q) ist;
modulares Reduzieren (14) eines ersten Produkts (A · F) aus dem Zähler (A) und dem Faktor (F) unter Verwendung eines Moduls (+ x), der gleich einer Summe aus einem zweiten Produkt (N · F) des Nenners und des Faktors und einer ganzen Zahl ist (x), um eine Hilfsgröße (H · F - Q · x) zu erhalten, die das Ergebnis (Q · x) aufweist, wobei der Schritt (14) des modularen Reduzierens gemäß folgender Gleichung durchgeführt wird:

$$H \cdot F - Q \cdot x = \mathrm{mod}\ (N \cdot F + x),$$

wobei Q das Ergebnis oder das ganzzahlige Vielfache des Ergebnisses der Ganzzahldivision ist, wobei F der Faktor ist, wobei A der Zähler ist, wobei N der Nenner ist, wobei H = A mod N gilt, wobei x die ganze Zahl ist und größer oder gleich Eins ist, wobei mod eine modulare Reduktion darstellt, und wobei H · F - Q · x die Hilfsgröße darstellt; und
Extrahieren (16) des Ergebnisses oder des ganzzahligen Vielfachen des Ergebnisses aus der Hilfsgröße, wobei im Schritt (12) des Bereitstellen des Faktors (F) im Falle einer ganzen Zahl (x) ungleich Eins der Faktor so gewählt wird, dass ein Produkt aus dem Faktor (F) und dem Nenner (N) größer als das Ergebnis der Division multipliziert mit der ganzen Zahl ist.

**Claims**

1. A device for calculating a result (Q) or an integer multiple of the result (Q) of an integer division of a numerator (A) by a denominator (N) in a cryptographic algorithm, the numerator and the denominator being parameters of the cryptographic algorithm, comprising:

means (12) adapted for providing a factor selected such that a product of the factor and the denominator (N) is greater than the result (Q);
means (14) adapted for modularly reducing a first product (A · F) of the numerator (A) and the factor (F) using a modulus (N · F + x) equaling a sum of a second product (N · F) of the denominator (N) and the factor (F) and of an integer (x) to obtain an auxiliary quantity (N · F · x) comprising the result, wherein the means (14) adapted for modularly reducing is formed to calculate the auxiliary quantity according to the following equation:

$$H \cdot F - Q \cdot x = A \cdot F \ \mathrm{mod}\ (N \cdot F + x)$$

wherein Q is the result or an integer multiple of the result of the integer division, wherein F is the factor, wherein A is the numerator, wherein N is the denominator, wherein H = A mod N, wherein x is the integer and greater than or equal to one, wherein mod represents a modular reduction, and wherein H · F - Q represents the auxiliary quantity; and
means (16) adapted for extracting the result (Q) or the integer multiple of the result from the auxiliary quantity,

wherein the means (12) adapted for providing the factor (F) is formed to select the factor in the case of an integer (x) unequal to one such that a product of the factor (F) and the denominator (N) is greater than the result (Q) of the division multiplied with the integer.

2. The device according to claim 1, wherein the means (12) for providing is formed to determine the factor in such a way that a base raised to the power of an auxiliary number equals the factor.

3. The device according to claim 2, wherein the base is 2 so that the multiplication by the factor corresponds to a shift by a number of positions in a register, wherein the number of positions equals the auxiliary number.

4. The device according to one of the preceding claims,
wherein a two's complement representation is used for representing negative numbers, and
wherein the auxiliary quantity is stored in a register (300) and wherein the means (16) for extracting comprises means for reading out a lower portion (-Q) of the register (300) in which the result is contained and means for inverting a value read out and for adding a one.

5. The device according to one of claims 1 to 3,
wherein the means (16) for extracting comprises:

means for calculating (26), as another auxiliary quantity, a result of a modular reduction of the numerator multiplied by the factor, wherein the denominator multiplied by the factor is provided as the modulus; and
means (32) for subtracting the auxiliary quantity from the other auxiliary quantity.

6. The device according to one of the preceding claims, wherein the division is an integer division.

7. The device according to claim 3, wherein the auxiliary number is selected according to the following equation:

$$e \geq a + 2 - 2n$$

wherein e is the auxiliary number, wherein a is the number of positions of the numerator (A) and wherein n is the number of positions of the denominator.

8. The device according to claim 5, wherein the means (16) for extracting is arranged to decide (34) whether the result is negative and, in this case, to add to the result the modulus provided in the means (14) for modularly reducing for being used.

9. The device according to claim 5, further comprising:

a first register for storing the numerator (A);
a second register for storing the denominator (N);
a third register for storing the other auxiliary quantity (H2);
a fourth register for storing the auxiliary quantity (H1); and
a register control unit for controlling the means (14) for calculating and the means (16) for extracting to obtain the result (Q).

10. The device according to claim 1,
wherein the means (14) for modularly reducing is formed to use a modulus equaling a sum of a product of the denominator and the factor and of an integer, wherein the integer is greater than or equal to 1, and
wherein the means (16) for extracting is arranged to perform a modular reduction using a modulus equaling a sum of a product of the denominator and the factor and of another integer, wherein the other integer is unequal to the integer so that the result of the division is obtained by the means (16) for extracting when a difference of the other integer and the integer equals 1, or the result, multiplied by an integer multiplier, is obtained, wherein the integer multiplier equals the difference of the other integer and the integer.

11. The device according to claim 1, embodied as a crypto coprocessor of a cryptographic device.

**12.** The device according to one of claims 1 to 3, wherein the integer is negative so that the result can be obtained without inversion.

**13.** The device according to claim 10, 11 or 12, wherein the other number is a negative integer.

**14.** A method for calculating a result (Q) or an integer multiple of the result (Q) of an integer division of a numerator (A) by a denominator (N) in a cryptographic algorithm, the numerator and the denominator being parameters of the cryptographic algorithm, comprising the following steps:

providing (12) a factor (F) which is selected such that a product (N · F) of the factor (F) and the denominator (N) is greater than the result (Q);
modularly reducing (14) a first product (A · F) of the numerator (A) and the factor (F) using a modulus (+ x) equaling a sum of a second product (N · F) of the denominator and the factor and of an integer (x) to obtain an auxiliary quantity (H · F - Q · x) comprising the result (Q · x), wherein the step (14) of modularly reducing is performed according to the following equation:

$$ H \cdot F - Q \cdot x = A \cdot F \bmod (N \cdot F + x) $$

wherein Q is the result or an integer multiple of the result of the integer division, wherein F is the factor, wherein A is the numerator, wherein N is the denominator, wherein H = A mod N, wherein x is the integer and greater than or equal to one, wherein mod represents a modular reduction, and wherein H · F - Q represents the auxiliary quantity; and
extracting (16) the result or the integer multiple of the result from the auxiliary quantity,
wherein in the step (12) for providing the factor (F) in the case of an integer (x) unequal to one the factor is selected such that a product of the factor (F) and the denominator (N) is greater than the result (Q) of the division multiplied with the integer.

**Revendications**

**1.** Dispositif de calcul d'un résultat (Q) ou d'un multiple entier du résultat (Q) d'une division par un nombre entier, d'un numérateur (A) par un dénominateur (N) au sein d'un algorithme cryptographique, le numérateur et le dénominateur étant des paramètres de l'algorithme cryptographique, comprenant des caractéristiques suivantes :

un dispositif (12) qui est conçu pour fournir un facteur choisi de façon à ce qu'un produit du facteur et du dénominateur (N) soit plus grand que le résultat ;
un dispositif (14) qui est conçu pour la réduction modulaire d'un premier produit (A • F) du numérateur (A) et du facteur (F) en utilisant un module (N • F + x) qui est égal à une somme d'un deuxième produit (N • F) du numérateur (N) et du facteur (F) et d'un nombre (x) entier, pour obtenir une grandeur (H • F - Q • x) auxiliaire qui présente le résultat, le dispositif (14) qui est conçu pour la réduction modulaire étant constitué pour calculer la grandeur auxiliaire selon l'équation suivante :

$$ H \bullet F - Q \bullet x = A \bullet F \bmod (N \bullet F + x), $$

Q étant le résultat ou le multiple par un nombre entier du résultat de la division par un nombre entier, F étant le facteur, A étant le numérateur, N étant le dénominateur, en ayant H = A mod N, x étant le nombre entier et étant supérieur ou égal à un, mod représentant une réduction modulaire ; et H • F - Q • x représentant la grandeur auxiliaire ; et
un dispositif (16) qui est conçu pour extraire le résultat (Q) ou le multiple par un nombre entier du résultat de la grandeur auxiliaire ;
le dispositif (12) qui est conçu pour fournir le facteur (F) étant constitué pour choisir dans le cas d'un nombre (x) entier différent de un le facteur de façon à ce qu'un produit du facteur (F) et du dénominateur (N) soit plus grand que le résultat de la division divisé par le nombre entier.

**2.** Dispositif suivant la revendication 1, dans lequel le dispositif (12) qui fournit le facteur est constitué pour déterminer le facteur de manière à ce qu'une base élevée à une puissance par un nombre auxiliaire soit égale au facteur.

**3.** Dispositif suivant la revendication 2, dans lequel la base est 2, de sorte que la multiplication par le facteur correspond à un décalage d'un certain nombre de positions dans un registre, le nombre de positions étant égal au nombre auxiliaire.

**4.** Dispositif suivant l'une des revendications précédentes, dans lequel une représentation à complément de 2 est utilisée pour une représentation de nombres négatifs ; et
dans lequel la grandeur auxiliaire est mémorisée dans un registre (300) et dans lequel le dispositif (16) d'extraction a un dispositif de lecture d'une partie (-Q) inférieure du registre (300), dans laquelle le résultat est contenu et un dispositif d'inversion d'une valeur lue et d'addition d'un un.

**5.** Dispositif suivant l'une des revendications 1 à 3, dans lequel le dispositif (16) d'extraction a des caractéristiques suivantes :

un dispositif de calcul (26) en tant qu'autre grandeur auxiliaire d'un résultat d'une réduction modulaire du numérateur multiplié par le facteur, le dénominateur multiplié par le facteur étant prévu comme module ; et
un dispositif (32) de soustraction de la grandeur auxiliaire de l'autre grandeur auxiliaire.

**6.** Dispositif suivant l'une des revendications précédentes, dans lequel la division est une division par un nombre entier.

**7.** Dispositif suivant la revendication 3, dans lequel le nombre auxiliaire est choisi selon l'équation suivante :

$$e \geq a + 2 - 2n,$$

dans laquelle e est le nombre auxiliaire, a étant le nombre des positions du numérateur et n étant le nombre des positions du dénominateur.

**8.** Dispositif suivant la revendication 5, dans lequel le dispositif (16) d'extraction est destiné à constater (34) si le résultat est négatif et, dans ce cas, à ajouter au résultat le module qui est prévu dans le dispositif (14) en vue d'être utilisé dans la réduction modulaire.

**9.** Dispositif suivant la revendication 5, qui a, en outre, des caractéristiques suivantes :

un premier registre de mémorisation du numérateur (A) ;
un deuxième registre de mémorisation du dénominateur (N) ;
un troisième registre de mémorisation de l'autre grandeur (H2) ;
un quatrième registre de mémorisation de la grandeur (H1) auxiliaire ; et
une unité de commande de registre pour commander le dispositif (14) afin qu'il calcule et le dispositif (16) afin qu'il extraie pour obtenir le résultat (Q).

**10.** Dispositif suivant la revendication 1,
dans lequel le dispositif (14) est constitué pour la réduction modulaire afin d'utiliser un module qui est égal à une somme d'un produit du dénominateur et du facteur et d'un nombre entier, le nombre entier étant supérieur ou égal à 1 ; et
dans lequel le dispositif (16) d'extraction est destiné à effectuer une réduction modulaire en utilisant un module qui est égal à une somme d'un produit du dénominateur et du facteur et d'un autre nombre entier, l'autre nombre entier étant différent du nombre entier, de sorte que, par le dispositif (16) d'extraction, on obtient le résultat de la division lorsqu'une différence entre l'autre nombre entier et le nombre entier est égale à 1, ou on obtient le résultat multiplié par un multiplicateur en nombre entier, le multiplicateur en nombre entier étant égal à la différence entre l'autre nombre entier et le nombre entier.

**11.** Dispositif suivant l'une des revendications précédentes, qui est constitué en cryptocoprocesseur d'un dispositif cryptographique.

**12.** Dispositif suivant l'une des revendications 1 à 3, dans lequel le nombre entier est négatif, de sorte que l'on peut obtenir le résultat sans inversion.

**13.** Dispositif suivant la revendication 10, 11 ou 12, dans lequel l'autre nombre est un nombre entier négatif.

**14.** Procédé de calcul d'un résultat (Q) ou d'un multiple par un nombre entier du résultat (Q) d'une division par un nombre entier d'un numérateur (A) par un dénominateur(N) au sein d'un algorithme cryptographique, le numérateur et le dénominateur étant des paramètres de l'algorithme cryptographique comprenant des stades suivants :

fourniture (12) d'un facteur (F) choisi de façon à ce qu'un produit (N • F) du facteur (F) et du dénominateur (N) soit plus grand que le résultat (Q) ;
réduction (14) modulaire d'un premier produit (A • F) du numérateur (A) et du facteur (F) en utilisant un module (N • F + x) qui est égal à une somme d'un deuxième produit (N • F) du numérateur (N) et du facteur (F) et d'un nombre (x) entier, pour obtenir une grandeur (H • F - Q • x) auxiliaire qui présente le résultat, le dispositif (14) qui est conçu pour la réduction modulaire étant constitué pour calculer la grandeur auxiliaire selon l'équation suivante :

$$H \cdot F - Q \cdot x = A \cdot F \bmod (N \cdot F + x),$$

Q étant le résultat ou le multiple par un nombre entier du résultat de la division par un nombre entier, F étant le facteur, A étant le numérateur, N étant le dénominateur, en ayant H = A mod N, x étant le nombre entier et étant supérieur ou égal à un, mod représentant une réduction modulaire ; et H • F - Q • x représentant la grandeur auxiliaire ; et
extraction (16) du résultat ou du multiple par un nombre entier du résultat à partir de la grandeur auxiliaire ;
dans lequel au stade (12) de la fourniture du facteur (F), dans le cas d'un nombre (x) entier différent de un, on choisit le facteur de façon à ce qu'un produit du facteur (F) et du dénominateur (N) soit plus grand que le résultat de la division multiplié par le nombre entier.

Q = A / N
A = Q * N + H
H = A mod N

10

Einrichtung zum Bereitstellen von e, damit $N * 2^e > Q$ gilt

12

Einrichtung zum Berechnen von $(H * 2^e - Q) = A * 2^e \mod(N * 2^e + 1)$

14

Einrichtung zum Extrahieren von Q aus $(H * 2^e - Q)$

16

**FIG 1**

$$e >= a + 2 - 2n \quad \sim 20$$

$$A := A * 2^e \quad \sim 22$$

$$N := N * 2^e \quad \sim 24$$

$$H1 := A \bmod N \quad \sim 26$$

$$N := N + 1 \quad \sim 28$$

$$H2 := A \bmod N \quad \sim 30$$

$$Q := H1 - H2 \quad \sim 32$$

34

$$Q < 0?$$

JA

36

$$Q := Q + N$$

38

Ausgabe von Q

NEIN

Ausgabe von Q $\quad \sim 38'$

Q = [A/N]
A: Bitlänge a
N: Bitlänge n

FIG 2

16

binäres Langzahlregister mit

$$(H * 2^e - Q)$$

msb-Seite                                                                                                          lsb-Seite

$$\underbrace{\phantom{xxxxxxxxxxxxx}}_{H} \qquad \cdots \qquad \underbrace{\phantom{xxxxxxx}}_{-Q} \quad 300$$

e Stellen $\triangleq$ Faktor $2^e$ = F

## FIG 3